(19) Europäisches Patentamt / European Patent Office / Office européen des brevets

(11) **EP 4 368 738 A1**

(12) **EUROPEAN PATENT APPLICATION**
published in accordance with Art. 153(4) EPC

(43) Date of publication:
**15.05.2024 Bulletin 2024/20**

(51) International Patent Classification (IPC):
***C22C 38/00*** (2006.01)   ***C21D 9/46*** (2006.01)
***C22C 38/06*** (2006.01)   ***C22C 38/60*** (2006.01)

(21) Application number: **22864237.7**

(22) Date of filing: **15.08.2022**

(52) Cooperative Patent Classification (CPC):
**C21D 9/46; C22C 38/00; C22C 38/06; C22C 38/60;**
Y02P 10/20

(86) International application number:
**PCT/JP2022/030899**

(87) International publication number:
**WO 2023/032652 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021   JP 2021141115**

(71) Applicant: **JFE Steel Corporation
Tokyo 100-0011 (JP)**

(72) Inventors:
• **MATSUI, Yoichiro
Tokyo 100-0011 (JP)**
• **CHIBA, Tadachika
Tokyo 100-0011 (JP)**
• **KANEKO, Shinjiro
Tokyo 100-0011 (JP)**

(74) Representative: **Hoffmann Eitle
Patent- und Rechtsanwälte PartmbB
Arabellastraße 30
81925 München (DE)**

(54) **STEEL SHEET, MEMBER, METHOD FOR PRODUCING SAID STEEL SHEET, AND METHOD FOR PRODUCING SAID MEMBER**

(57)   Provided are a steel sheet that has high strength, high ductility, excellent stretch flange formability, and high strain hardening exponent; a related member; and methods for manufacturing the same.

The steel sheet has a chemical composition including, in mass%, C: 0.06 to 0.25%, Si: 0.4 to 2.5%, Mn: 1.5 to 3.5%, P: 0.02% or less, S: 0.01% or less, sol. Al: less than 1.0%, and N: less than 0.015%, the balance being Fe and incidental impurities, the steel sheet being such that the steel sheet includes a steel microstructure including, in area fraction, polygonal ferrite: 10% or less (including 0%), tempered martensite: 30% or more, fresh martensite: 20% or less (including 0%), lower bainite: 5 to 50%, and, in volume fraction, retained austenite: 5 to 20%, and the steel sheet has $S_{C \geq 0.5}/S_{C \geq 0.3} \times 100$ of 15% or more.

FIG. 1

EP 4 368 738 A1

**Description**

Technical Field

The present invention relates to a steel sheet for use in various applications including automobiles and home appliances, to a member using the steel sheet, and to methods for manufacturing the same.

Background Art

In response to the recent growth in the need for lightweight automobile bodies, 980-1180 MPa grade high strength steel sheets are increasingly applied to automobile frame parts and seat parts. However, the application of 980-1180 MPa grade high strength steel sheets to automotive parts tends to result in press cracking due to low ductility and low stretch flange formability. Thus, these high strength steel sheets are required to be improved in formability compared to the conventional level.

From the above background, techniques for enhancing the ductility of steel sheets have led to the development of TRIP steel in which retained $\gamma$ is dispersed in the microstructure of the steel sheets.

For example, Patent Literature 1 discloses that a high-ductility steel sheet having a TS (tensile strength) of 80 kgf/mm$^2$ or more and TS $\times$ El $\geq$ 2500 kgf/mm$^2 \cdot$% is obtained by annealing a steel that contains C: 0.10 to 0.45%, Si: 0.5 to 1.8%, and Mn: 0.5 to 3.0%, and aging the steel at 350 to 500°C for 1 to 30 minutes to form retained $\gamma$.

Patent Literature 2 discloses that a steel sheet excellent in ductility El and stretch flange formability $\lambda$ is obtained by annealing a steel that contains C: 0.10 to 0.25%, Si: 1.0 to 2.0%, and Mn: 1.5 to 3.0%, cooling the steel to 450 to 300°C at 10°C/s or more, and holding the steel for 180 to 600 seconds, thereby controlling the space factor of retained austenite to 5% or more, the space factor of bainitic ferrite to 60% or more, and the space factor of polygonal ferrite to 20% or less.

Patent Literature 3 discloses that a steel sheet having a specific chemical composition is annealed, cooled to a range of temperatures of 150 to 350°C, and subsequently reheated to and held at 350 to 600°C. According to the disclosure, the microstructure obtained as described above includes ferrite, tempered martensite, and retained austenite, and high ductility and high stretch flange formability can be imparted to the steel sheet. This technique utilizes the so-called Q & P (quenching & partitioning) principle (quenching and partitioning of carbon from martensite to austenite) in which the steel in the cooling process is cooled once to a range of temperatures between the martensite start temperature (Ms temperature) and the martensite finish temperature (Mf temperature), and is subsequently reheated and held to stabilize retained $\gamma$. In recent years, this principle is applied to the development of high strength steels with high ductility and high stretch flange formability.

Patent Literature 4 discloses a technique that improves the Q & P process described above. Specifically, this technique achieves high ductility and high stretch flange formability by annealing a steel with a specific chemical composition at a temperature equal to or higher than Ae$_3$ temperature - 10°C to ensure that polygonal ferrite will be 5% or less, and cooling the steel to a relatively high finish cooling temperature of Ms - 10°C to Ms - 100°C to ensure that upper bainite will be formed when the steel is reheated to 350 to 450°C.

Furthermore, Patent Literature 5 discloses a technique that utilizes low-temperature bainite and high-temperature bainite to obtain a steel sheet with excellent ductility and low-temperature toughness. Specifically, a steel that contains C: 0.10 to 0.5% is annealed, cooled to 150 to 400°C at a cooling rate of 10°C/s or more, held at the above temperature for 10 to 200 seconds to form low-temperature bainite, then reheated to a range of temperatures of more than 400°C and 540°C or below, and held for 50 seconds or more to form high-temperature bainite. A steel sheet with excellent ductility and low-temperature toughness is thus obtained.

Citation List

Patent Literature

PTL 1: Japanese Examined Patent Application Publication No. 6-35619
PTL 2: Japanese Patent No. 4411221
PTL 3: Japanese Patent No. 5463685
PTL 4: Japanese Patent No. 5780086
PTL 5: Japanese Patent No. 5728115

Summary of Invention

Technical Problem

The conventional TRIP steel described in Patent Literature 1 has excellent ductility, but its stretch flange formability is very low.

In the technique described in Patent Literature 2, the microstructure is mainly bainitic ferrite and includes a small amount of ferrite. Because of this configuration, the steel sheet is excellent in stretch flange formability but is not necessarily high in ductility. Thus, further improvements in ductility are desired for application to parts that are difficult to form.

The technique described in Patent Literature 3 realizes relatively high ductility and high stretch flange formability compared to the conventional TRIP steels and steels making use of bainitic ferrite. However, fracture occurs in the formation of hard-to-form parts, such as center pillars, and further enhancements in ductility are desired. It has become clear that a steel sheet according to this technique does not necessarily have a sufficient strain hardening exponent (n value) that is an index of strain hardening rate and has a good correlation with bulging formability.

The technique described in Patent Literature 4 cannot ensure sufficient ductility because the polygonal ferrite formation is lessened in order to reduce the amount of massive martensite. Furthermore, because the finish cooling temperature is set relatively high in order to enhance El, a large amount of non-transformed $\gamma$ remains at the termination of cooling and consequently massive martensite tends to remain.

The technique described in Patent Literature 5 makes use of low-temperature bainite and high-temperature bainite in order to enhance ductility. Bainite that transforms at low temperatures has only a small contribution to ductility enhancement, and the use of high-temperature bainite tends to be accompanied by massive microstructures that remain. It is therefore difficult to impart high ductility and high stretch flange formability at the same time.

As described above, the conventional techniques have been unsuccessful in producing steel sheets that ensure sufficiently high ductility, high stretch flange formability, and further high strain hardening exponent.

The present invention has been made to solve the problems discussed above and provides a steel sheet that has 980 MPa or higher tensile strength, has high ductility and excellent stretch flange formability, and further has high strain hardening exponent; a related member; and methods for manufacturing the same.

As used herein, the term steel sheet includes galvanized steel sheet resulting from surface galvanizing treatment.

In the present invention, 980 MPa or higher tensile strength means that the tensile strength in accordance with JIS Z2241 is 980 MPa or more.

Furthermore, the term high ductility means that the total elongation T-El is 16.0% or more when TS is less than 1180 MPa, 14.0% or more when TS is 1180 MPa or more and less than 1320 MPa, and 13.0% or more when TS is 1320 MPa or more.

Furthermore, the term excellent stretch flange formability means that the hole expansion ratio $\lambda$ (%) = $\{(d - d_0)/d_0\} \times 100$ is 30% or more. Here, $d_0$: initial hole diameter (mm), and d: hole diameter (mm) at the occurrence of cracking. A 100 mm $\times$ 100 mm square sample is punched with a punching tool having a punch diameter of 10 mm and a die diameter of 10.3 mm (13% clearance), and a conical punch having an apex angle of 60 degrees is inserted into the hole in such a manner that the burr produced at the time of punching will be directed to the outside. The hole is expanded until the sheet is cracked through the thickness.

Furthermore, the term high strain hardening exponent means that the n value obtained from two points on a nominal stress-nominal strain curve where the nominal strain is 2% and 5% in accordance with JIS Z2253 is 0.130 or more when TS is less than 1180 MPa, 0.070 or more when TS is 1180 MPa or more and less than 1320 MPa, and 0.060 or more when TS is 1320 MPa or more.

Solution to Problem

The present inventors carried out extensive studies on approaches to imparting high ductility and excellent stretch flange formability as well as high strain hardening exponent and have obtained the following conclusions.

(i) After a steel slab having a predetermined chemical composition is hot rolled and cold rolled, the steel is held at an annealing temperature of 810 to 900°C and is further cooled in a range of temperatures from 810°C to a martensite start temperature Ms at an average cooling rate (CR1) of 5 to 100°C/s. In this manner, polygonal ferrite is controlled to 10% or less in order to ensure that predetermined retained $\gamma$ will be present in the final microstructure.

(ii) In the annealing step, the steel that has been held is cooled in such a manner that the steel resides in a range of temperatures from the martensite start temperature Ms to a residence finish temperature (T1) (°C) for a residence time t of 5 seconds or more and 60 seconds or less while being cooled at an average cooling rate (CR2) of 10°C/s or less. In this manner, martensite is partly formed, and subsequently bainite is formed. This intermediate holding in the above temperature range accelerates bainite transformation by using martensite as a nucleus, thus forming lower bainite that contributes to enhancements in strength-ductility balance and strain hardening exponent, and retained austenite (retained $\gamma$) that contributes to ductility enhancement in the final microstructure.

(iii) The steel is cooled rapidly in a range of temperatures from the residence finish temperature (T1) (°C) to a finish cooling temperature (T2) (°C) of 180°C or above and below 290°C at an average cooling rate (CR3) of 3 to 100°C/s before the occurrence of carbon enrichment in the remaining non-transformed $\gamma$ region to $T_0$ composition that is the cause of massive microstructure formation. In this manner, the remaining non-transformed $\gamma$ region is divided by martensite transformation or lower bainite transformation, with the result that retained $\gamma$ is dispersed and the amount of massive microstructures is reduced.

Here, the term massive microstructures indicates fresh martensite or retained austenite that looks massive on SEM. Furthermore, the term $T_0$ composition indicates a composition in which the free energies of austenite and bainite are equal to each other and bainite transformation stops.

(iv) Subsequently, the steel is reheated in a range of temperatures from the finish cooling temperature (T2) to 380°C at an average heating rate of 2°C/s or more, and is caused to reside in a range of temperatures of 340°C or above and 590°C or below for 20 seconds or more and 3000 seconds or less to convert martensite into tempered martensite as well as to partition carbon into the film-like retained $\gamma$ that has been formed in the lower bainite during the residence in the course of the cooling process, thereby stabilizing the retained $\gamma$. Furthermore, the steel is gradually cooled at an average cooling rate (CR4) of 0.01 to 5°C/s to eliminate or reduce the formation of massive microstructures due to the excessive partitioning of carbon into the retained $\gamma$ and to enhance stretch flangeability by self-tempering of fresh martensite.

The conventional difficulties in achieving both utilization of stable retained $\gamma$ and the elimination or reduction of massive microstructures can be overcome by making use of bainite transformation prior to martensite transformation and further by utilizing gradual cooling after reheating.

As a result, a steel sheet can be obtained that has superior ductility and excellent stretch flange formability as well as high strain hardening exponent. Furthermore, strength can be increased according to the present invention.

The present invention has been made based on the above findings. Specifically, the present invention provides the following.

[1] A steel sheet having a chemical composition including, in mass%:

C: 0.06 to 0.25%,
Si: 0.4 to 2.5%,
Mn: 1.5 to 3.5%,
P: 0.02% or less,
S: 0.01% or less,
sol. Al: less than 1.0%, and
N: less than 0.015%,
the balance being Fe and incidental impurities,
the steel sheet being such that:

the steel sheet includes a steel microstructure including, in area fraction,
polygonal ferrite: 10% or less (including 0%),
tempered martensite: 30% or more,
fresh martensite: 20% or less (including 0%),
lower bainite: 5 to 50%, and, in volume fraction, retained austenite: 5 to 20%, and
the steel sheet has a proportion $S_{C \geq 0.5}/S_{C \geq 0.3} \times 100$ of 15% or more wherein $S_{C \geq 0.5}$ is the area of a region having a C concentration of 0.50% or more and $S_{C \geq 0.3}$ is the area of a region having a C concentration of 0.30% or more.

[2] The steel sheet described in [1], wherein the chemical composition further includes, in mass%, one or two selected from:

Ti: 0.1% or less, and
B: 0.01% or less.

[3] The steel sheet described in [1] or [2], wherein the chemical composition further includes, in mass%, one, or two or more selected from:

Cu: 1% or less,
Ni: 1% or less,
Cr: 1.0% or less,
Mo: 0.5% or less,
V: 0.5% or less,
Nb: 0.1% or less,
Zr: 0.2% or less, and
W: 0.2% or less.

[4] The steel sheet described in any of [1] to [3], wherein the chemical composition further includes, in mass%, one, or two or more selected from:

Ca: 0.0040% or less,
Ce: 0.0040% or less,
La: 0.0040% or less,
Mg: 0.0030% or less,
Sb: 0.1% or less, and
Sn: 0.1% or less.

[5] The steel sheet described in any of [1] to [4], which has a galvanized layer on a surface.

[6] A member obtained using the steel sheet described in any of [1] to [5].

[7] A method for manufacturing a steel sheet, including hot rolling and cold rolling a steel slab having the chemical composition described in any of [1] to [4], and annealing the cold rolled steel sheet, the annealing including:

a step of holding the steel sheet at an annealing temperature of 810 to 900°C;

a step of cooling the steel sheet in a range of temperatures from 810°C to a martensite start temperature Ms at an average cooling rate CR1 of 5 to 100°C/s;

a step of causing the steel sheet to reside in a range of temperatures from the martensite start temperature Ms to a residence finish temperature T1 of Ms - 100 (°C) to Ms - 10 (°C) for a residence time t of 5 seconds or more and 60 seconds or less while cooling the steel sheet at an average cooling rate CR2 of 10°C/s or less;

a step of cooling the steel sheet in a range of temperatures from the residence finish temperature T1 to a finish cooling temperature T2 of 180°C or above and below 290°C at an average cooling rate CR3 of 3 to 100°C/s;

a step of heating the steel sheet in a range of temperatures from the finish cooling temperature T2 to 380°C at an average heating rate of 2°C/s or more;

a step of causing the steel sheet to reside in a range of temperatures of 340°C or above and 590°C or below for 20 seconds or more and 3000 seconds or less while cooling the steel sheet at an average cooling rate CR4 of 0.01 to 5°C/s; and

a step of cooling the steel sheet to a temperature of 50°C or below at an average cooling rate CR5 of 0.1°C/s or more.

[8] The method for manufacturing a steel sheet described in [7], wherein the step of causing the steel sheet to reside at an average cooling rate CR4 of 0.01 to 5°C/s includes performing a hot-dip galvanizing treatment or a hot-dip galvannealing treatment on the steel sheet.

[9] The method for manufacturing a steel sheet described in [7], further including a step of performing an electrogalvanizing treatment on the steel sheet after the step of cooling the steel sheet at an average cooling rate CR5 of 0.1°C/s or more.

[10] A method for manufacturing a member, including a step of subjecting the steel sheet described in any of [1] to [5] to at least one working of forming and joining to produce a member.

Advantageous Effects of Invention

According to the present invention, a steel sheet having superior ductility, excellent stretch flange formability, and high strain hardening exponent, and a related member can be obtained. Furthermore, strength can be increased according to the present invention. The steel sheet of the present invention may be applied to an automotive part to realize weight reduction of the automotive part. Enhanced fuel efficiency is thus expected.

Brief Description of Drawings

[Fig. 1] Fig. 1 is an example SEM image of a steel microstructure of a steel sheet.
[Fig. 2] Fig. 2 is a diagram illustrating a Formaster test for measuring the area fractions of tempered martensite and lower bainite in a steel microstructure of the present invention.
[Fig. 3] Fig. 3 is a diagram illustrating a method for manufacturing a steel sheet according to the present invention.

Description of Embodiments

The present invention will be described in detail below. The present invention is not limited to the embodiments described below.

A steel sheet of the present invention has a chemical composition including, in mass%, C: 0.06 to 0.25%, Si: 0.4 to 2.5%, Mn: 1.5 to 3.5%, P: 0.02% or less, S: 0.01% or less, sol. Al: less than 1.0%, and N: less than 0.015%, the balance being Fe and incidental impurities. The steel sheet includes a steel microstructure including, in area fraction, polygonal ferrite: 10% or less (including 0%), tempered martensite: 30% or more, fresh martensite: 20% or less (including 0%), lower bainite: 5 to 50%, and, in volume fraction, retained austenite: 5 to 20%. The steel sheet has a proportion $S_{C\geq0.5}/S_{C\geq0.3} \times 100$ of 15% or more wherein $S_{C\geq0.5}$ is the area of a region having a C concentration of 0.50% or more and $S_{C\geq0.3}$ is the area of a region having a C concentration of 0.30% or more.
The steel sheet of the present invention will be described below in the order of its chemical composition and its steel microstructure.

The steel sheet of the present invention includes the components described below. In the following description, the unit "%" for the contents of components means "mass%".

C: 0.06 to 0.25%

Carbon is added to ensure predetermined strength by ensuring an area fraction of tempered martensite, to enhance ductility by ensuring a volume fraction of retained $\gamma$, and to stabilize retained $\gamma$ by being concentrated in retained $\gamma$ and thereby to enhance ductility. When the C content is less than 0.06%, the strength of the steel sheet and the ductility of the steel sheet cannot be ensured sufficiently. Thus, the lower limit is limited to 0.06%. The C content is preferably 0.09% or more, and more preferably 0.11% or more. When the C content exceeds 0.25%, lower bainite transformation during the residence in the course of cooling is retarded, and it becomes difficult to form a predetermined amount of film-like retained $\gamma$ adjacent to lower bainite transformation. As a result, ductility is lowered. Furthermore, the amount of massive martensite or massive retained $\gamma$ is increased to deteriorate stretch flange formability. Furthermore, characteristics of the steel sheet, such as spot weldability, bendability, and flangeability, are significantly deteriorated. Thus, the upper limit of the C content is limited to 0.25%. In order to enhance ductility and spot weldability, the C content is preferably 0.22% or less. In order to further improve ductility and spot weldability, the C content is more preferably 0.20% or less.

Si: 0.4 to 2.5%

Silicon is added to offer high strength by strengthening ferrite and to enhance the stability of retained $\gamma$ by suppressing the formation of carbides in martensite and bainite and thereby to enhance ductility. In order to suppress carbide formation and thereby to enhance ductility, the Si content is limited to 0.4% or more. In order to enhance ductility, the Si content is preferably 0.6% or more. More preferably, the Si content is 0.8% or more. When the Si content exceeds 2.5%, the rolling load at the time of hot rolling is extremely increased to make sheet production difficult. Furthermore, chemical convertibility and weld toughness are deteriorated. For these reasons, the Si content is limited to 2.5% or less. To ensure chemical convertibility and the toughness of the base material and a weld, the Si content is preferably less than 2.0%. To ensure weld toughness, the Si content is preferably 1.8% or less, and more preferably 1.5% or less.

Mn: 1.5 to 3.5%

Manganese is an important element from the points of view of ensuring strength by ensuring a predetermined area fraction of tempered martensite and/or bainite; improving ductility by lowering the Ms temperature of retained $\gamma$ and thereby stabilizing retained $\gamma$; and enhancing ductility by suppressing the formation of carbides in bainite similarly to silicon. In order to obtain these effects, the Mn content is limited to 1.5% or more. In order to enhance ductility by stabilizing retained $\gamma$, the Mn content is preferably 2.5% or more. The Mn content is preferably 2.6% or more, and more preferably 2.7% or more. When the Mn content exceeds 3.5%, bainite transformation is significantly retarded to make it difficult to ensure high ductility. When the Mn content exceeds 3.5%, moreover, it becomes difficult to suppress the formation of massive coarse γ and massive coarse martensite, resulting in a decrease in stretch flange formability. Thus, the Mn content is limited to 3.5% or less. In order to ensure high ductility by promoting bainite transformation, the Mn content is preferably 3.2% or less. More preferably, the Mn content is 3.1% or less.

P: 0.02% or less

Phosphorus is an element that strengthens steel, but much phosphorus deteriorates spot weldability. Thus, the P content is limited to 0.02% or less. In order to improve spot weldability, the P content is preferably 0.01% or less. The P content may be nil. From the point of view of manufacturing cost, the P content is preferably 0.001% or more.

S: 0.01% or less

Sulfur is an element that is effective in improving scale exfoliation in hot rolling and effective in suppressing nitridation during annealing, but sulfur lowers spot weldability, bendability, and flangeability. From the points of view of the above, the S content is limited to 0.01% or less. In the present invention, the contents of C, Si, and Mn are high and spot weldability tends to be deteriorated. In order to improve spot weldability, the S content is preferably 0.0020% or less, and more preferably less than 0.0010%. The S content may be nil. From the point of view of manufacturing cost, the S content is preferably 0.0001% or more. More preferably, the S content is 0.0005% or more.

sol. Al: less than 1.0%

Aluminum is added for the purposes of deoxidization and stabilizing retained γ as a substitute for silicon. The lower limit of the sol. Al content is not particularly limited. For stable deoxidization, the sol. Al content is preferably 0.005% or more. The sol. Al content is more preferably 0.01% or more. On the other hand, 1.0% or more sol. Al significantly lowers the strength of the base material and also affects adversely chemical convertibility. Thus, the sol. Al content is limited to less than 1.0%. In order to obtain high strength, the sol. Al content is more preferably less than 0.50%, and still more preferably 0.20% or less.

N: less than 0.015%

Nitrogen is an element that forms nitrides, such as BN, AlN, and TiN, in steel. This element lowers the hot ductility of steel and lowers the surface quality. Furthermore, in B-containing steel, nitrogen has a harmful effect in eliminating the effect of boron through the formation of BN. The surface quality is significantly deteriorated when the N content is 0.015% or more. Thus, the N content is limited to less than 0.015%. The N content is preferably 0.010% or less. The N content may be nil. From the point of view of manufacturing cost, the N content is preferably 0.0001% or more. More preferably, the N content is 0.001% or more.

The balance after the above components is Fe and incidental impurities. The steel sheet of the present invention preferably has a chemical composition that contains the basic components described above, with the balance consisting of iron (Fe) and incidental impurities.

In addition to the above components, the chemical composition of the steel sheet of the present invention may appropriately include one, or two or more optional elements selected from the following (A), (B), and (C):

(A) in mass%, one or two selected from Ti: 0.1% or less and B: 0.01% or less,
(B) in mass%, one, or two or more selected from Cu: 1% or less, Ni: 1% or less, Cr: 1.0% or less, Mo: 0.5% or less, V: 0.5% or less, Nb: 0.1% or less, Zr: 0.2% or less, and W: 0.2% or less,
(C) in mass%, one, or two or more selected from Ca: 0.0040% or less, Ce: 0.0040% or less, La: 0.0040% or less, Mg: 0.0030% or less, Sb: 0.1% or less, and Sn: 0.1% or less.

Ti: 0.1% or less

Titanium fixes nitrogen in steel as TiN to produce an effect of enhancing hot ductility and an effect of allowing boron to produce its effect of enhancing hardenability. Furthermore, titanium has an effect of reducing the size of the microstructure through TiC precipitation. In order to obtain these effects, the Ti content is preferably 0.002% or more. In order to fix nitrogen sufficiently, the Ti content is more preferably 0.008% or more. The Ti content is still more preferably 0.010% or more. On the other hand, more than 0.1% titanium may cause an increase in rolling load and a decrease in ductility by an increased amount of precipitation strengthening. Thus, when titanium is added, the Ti content is limited to 0.1% or less. Preferably, the Ti content is 0.05% or less. In order to ensure high ductility, the Ti content is more preferably 0.03% or less.

B: 0.01% or less

Boron is an element that enhances the hardenability of steel and facilitates the formation of a predetermined area fraction of tempered martensite and/or bainite.
Furthermore, residual solute boron enhances delayed fracture resistance. In order to obtain these effects of boron, the B content is preferably 0.0002% or more. The B content is more preferably 0.0005% or more. Still more preferably, the B content is 0.0010% or more. When, on the other hand, the B content exceeds 0.01%, the effects are saturated, and further hot ductility is significantly lowered to invite surface defects. Thus, when boron is added, the B content is limited to 0.01% or less. Preferably, the B content is 0.0050% or less. More preferably, the B content is 0.0030% or less.

Cu: 1% or less

Copper enhances the corrosion resistance in automobile use environments. Furthermore, corrosion products of copper cover the surface of the steel sheet and can suppress penetration of hydrogen into the steel sheet. Copper is an element that is mixed when scraps are used as raw materials. By accepting copper contamination, recycled materials can be used as raw materials and thereby manufacturing costs can be reduced. From these points of view, the Cu content is preferably 0.005% or more, and, further from the point of view of enhancing delayed fracture resistance, the Cu content is more preferably 0.05% or more. Still more preferably, the Cu content is 0.10% or more. On the other hand, too much copper invites surface defects. Thus, when copper is added, the Cu content is limited to 1% or less. The Cu content is preferably 0.4% or less, and more preferably 0.2% or less.

Ni: 1% or less

Similar to copper, nickel can enhance corrosion resistance. Furthermore, nickel can also eliminate or reduce the occurrence of surface defects that tend to occur when the steel contains copper. To benefit from these effects, it is preferable to add 0.01% or more nickel. The Ni content is more preferably 0.04% or more, and still more preferably 0.06% or more. On the other hand, adding too much nickel can instead cause surface defects because scales are formed nonuniformly in a heating furnace, and also increases the cost. Thus, when nickel is added, the Ni content is limited to 1% or less. The Ni content is preferably 0.4% or less, and more preferably 0.2% or less.

Cr: 1.0% or less

Chromium may be added to produce an effect of enhancing the hardenability of steel and an effect of suppressing the formation of carbides in martensite and upper/lower bainite. In order to obtain these effects, the Cr content is preferably 0.01% or more. The Cr content is more preferably 0.03% or more, and still more preferably 0.06% or more. On the other hand, too much chromium deteriorates pitting corrosion resistance. Thus, when chromium is added, the Cr content is limited to 1.0% or less. The Cr content is preferably 0.8% or less, and more preferably 0.4% or less.

Mo: 0.5% or less

Molybdenum may be added to produce an effect of enhancing the hardenability of steel and an effect of suppressing the formation of carbides in martensite and upper/lower bainite. In order to obtain these effects, the Mo content is preferably 0.01% or more. The Mo content is more preferably 0.03% or more, and still more preferably 0.06% or more. On the other hand, molybdenum significantly deteriorates the chemical convertibility of the cold rolled steel sheet. Thus, when molybdenum is added, the Mo content is limited to 0.5% or less. From the point of view of enhancing chemical convertibility, the Mo content is preferably 0.15% or less.

V: 0.5% or less

Vanadium may be added to produce an effect of enhancing the hardenability of steel, an effect of suppressing the formation of carbides in martensite and upper/lower bainite, an effect of reducing the size of the microstructure, and an effect of improving delayed fracture resistance through the precipitation of carbide. In order to obtain these effects, the V content is preferably 0.003% or more. The V content is more preferably 0.005% or more, and still more preferably 0.010% or more. On the other hand, much vanadium significantly deteriorates castability. Thus, when vanadium is added, the V content is limited to 0.5% or less. The V content is preferably 0.3% or less, and more preferably 0.1% or less. The V content is still more preferably 0.05% or less, and further preferably 0.03% or less.

Nb: 0.1% or less

Niobium may be added to produce an effect of reducing the size of the steel microstructure and thereby increasing the strength, and, through grain size reduction, an effect of promoting bainite transformation, an effect of improving bendability, and an effect of enhancing delayed fracture resistance. In order to obtain these effects, the Nb content is preferably 0.002% or more. The Nb content is more preferably 0.004% or more, and still more preferably 0.010% or more. On the other hand, adding much niobium results in excessive precipitation strengthening and low ductility. Furthermore, the rolling load is increased and castability is deteriorated. Thus, when niobium is added, the Nb content is limited to 0.1% or less. The Nb content is preferably 0.05% or less, and more preferably 0.03% or less.

Zr: 0.2% or less

Zirconium may be added to produce an effect of enhancing the hardenability of steel, an effect of suppressing the formation of carbides in bainite, an effect of reducing the size of the microstructure, and an effect of improving delayed fracture resistance through the precipitation of carbide. In order to obtain these effects, the Zr content is preferably 0.005% or more. The Zr content is more preferably 0.008% or more, and still more preferably 0.010% or more. When, on the other hand, the steel contains much zirconium, increased amounts of coarse precipitates, such as ZrN and ZrS, remain undissolved at the time of slab heating before hot rolling to cause deterioration in delayed fracture resistance. Thus, when zirconium is added, the Zr content is limited to 0.2% or less. The Zr content is preferably 0.15% or less, and more preferably 0.08% or less. The Zr content is still more preferably 0.03% or less, and further preferably 0.02% or less.

W: 0.2% or less

Tungsten may be added to produce an effect of enhancing the hardenability of steel, an effect of suppressing the formation of carbides in bainite, an effect of reducing the size of the microstructure, and an effect of improving delayed fracture resistance through the precipitation of carbide. In order to obtain these effects, the W content is preferably 0.005% or more. The W content is more preferably 0.008% or more, and still more preferably 0.010% or more. When, on the other hand, the steel contains much tungsten, increased amounts of coarse precipitates, such as WN and WS, remain undissolved at the time of slab heating before hot rolling to cause deterioration in delayed fracture resistance. Thus, when tungsten is added, the W content is limited to 0.2% or less. The W content is preferably 0.15% or less, and more preferably 0.08% or less. The W content is still more preferably 0.03% or less, and further preferably 0.02% or less.

Ca: 0.0040% or less

Calcium fixes sulfur as CaS and contributes to improvements in bendability and delayed fracture resistance. Thus, the Ca content is preferably 0.0002% or more. The Ca content is more preferably 0.0005% or more, and still more preferably 0.0010% or more. On the other hand, much calcium deteriorates surface quality and bendability. Thus, when calcium is added, the Ca content is limited to 0.0040% or less. The Ca content is preferably 0.0035% or less, and more preferably 0.0020% or less.

Ce: 0.0040% or less

Similar to calcium, cerium fixes sulfur and contributes to improvements in bendability and delayed fracture resistance. Thus, the Ce content is preferably 0.0002% or more. The Ce content is more preferably 0.0004% or more, and still more preferably 0.0006% or more. On the other hand, much cerium deteriorates surface quality and bendability. Thus, when cerium is added, the Ce content is limited to 0.0040% or less. The Ce content is preferably 0.0035% or less, and more preferably 0.0020% or less.

La: 0.0040% or less

Similar to calcium, lanthanum fixes sulfur and contributes to improvements in bendability and delayed fracture resistance. Thus, the La content is preferably 0.0002% or more. The La content is more preferably 0.0004% or more, and still more preferably 0.0006% or more. On the other hand, much lanthanum deteriorates surface quality and bendability. Thus, when lanthanum is added, the La content is limited to 0.0040% or less. The La content is preferably 0.0035% or less, and more preferably 0.0020% or less.

Mg: 0.0030% or less

Magnesium fixes oxygen as MgO and contributes to improvement in delayed fracture resistance. Thus, the Mg content is preferably 0.0002% or more. The Mg content is more preferably 0.0004% or more, and still more preferably 0.0006% or more. On the other hand, much magnesium deteriorates surface quality and bendability. Thus, when magnesium is added, the Mg content is limited to 0.0030% or less. The Mg content is preferably 0.0025% or less, and more preferably 0.0010% or less.

Sb: 0.1% or less

Antimony suppresses oxidation and nitridation of a superficial portion of the steel sheet and thereby eliminates or reduces the loss of the C and B contents in the superficial portion. Furthermore, the elimination or reduction of the loss of the C and B contents leads to suppressed formation of ferrite in the superficial portion of the steel sheet, thus increasing strength and improving delayed fracture resistance. From these points of view, the Sb content is preferably 0.002% or more. The Sb content is more preferably 0.004% or more, and still more preferably 0.006% or more. When, on the other hand, the Sb content exceeds 0.1%, castability is deteriorated and segregation occurs at prior $\gamma$ grain boundaries to deteriorate the delayed fracture resistance of sheared end faces. Thus, when antimony is added, the Sb content is limited to 0.1% or less. The Sb content is preferably 0.04% or less, and more preferably 0.03% or less.

Sn: 0.1% or less

Tin suppresses oxidation and nitridation of a superficial portion of the steel sheet and thereby eliminates or reduces the loss of the C and B contents in the superficial portion. Furthermore, the elimination or reduction of the loss of the C and B contents leads to suppressed formation of ferrite in the superficial portion of the steel sheet, thus increasing strength and improving delayed fracture resistance. From these points of view, the Sn content is preferably 0.002% or more. The Sn content is preferably 0.004% or more, and more preferably 0.006% or more. When, on the other hand, the Sn content exceeds 0.1%, castability is deteriorated. Furthermore, tin is segregated at prior $\gamma$ grain boundaries to deteriorate the delayed fracture resistance of sheared end faces. Thus, when tin is added, the Sn content is limited to 0.1% or less. The Sn content is preferably 0.04% or less, and more preferably 0.03% or less.

When the content of any of the above optional components is below the preferred lower limit, the optional element present below the lower limit does not impair the advantageous effects of the present invention. Thus, such an optional element below the preferred lower limit content is regarded as an incidental impurity.

Next, the steel microstructure of the steel sheet of the present invention will be described.

Polygonal ferrite: 10% or less (including 0%)

Polygonal ferrite, which is formed during annealing or a cooling process, contributes to enhancement in ductility but decreases stretch flange formability by giving rise to a difference in hardness from surrounding hard phases, such as martensite. Polygonal ferrite does not impair the advantageous effects of the present invention as long as the area fraction thereof is 10% or less and therefore, polygonal ferrite may be contained up to 10% or less in area fraction. Thus, in the present invention, the area fraction of polygonal ferrite is limited to 10% or less. The polygonal ferrite is preferably 5% or less, and more preferably 2% or less. The polygonal ferrite may be 0%.

Tempered martensite: 30% or more

In order to obtain predetermined strength and stretch flange formability, the area fraction of tempered martensite is limited to 30% or more. The tempered martensite is preferably 40% or more. When, on the other hand, the tempered martensite exceeds 80%, the strength is excessively increased and the ductility is lowered. Thus, the tempered martensite is preferably 80% or less. The tempered martensite is more preferably 75% or less.

Fresh martensite: 20% or less (including 0%)

The final tempering step (the residence step at an average cooling rate CR4 described later) to produce a large amount of bainite transformation conventionally results in a large amount of massive martensite or massive retained $\gamma$ that remains. The conventional approach to preventing this is to reduce the amount of manganese and thereby to promote bainite transformation. However, decreasing the Mn content lowers ductility because of the loss of the effects of stabilizing retained $\gamma$ and increasing the volume fraction of retained $\gamma$. In contrast, the present invention performs an appropriate cooling treatment on the steel sheet containing a large amount of manganese, and thereby can make use of bainite transformation and reduce the occurrence of massive microstructures at the same time.

Excellent stretch flange formability can be ensured by reducing the area fraction of massive fresh martensite microstructures to 20% or less. Thus, the area fraction of fresh martensite in the present invention is limited to 20% or less. In order to ensure excellent stretch flange formability, the fresh martensite is preferably 10% or less. The fresh martensite is more preferably 5% or less. The fresh martensite may be 0%.

Lower bainite: 5 to 50%

Lower bainite, which is formed during residence in the course of cooling after annealing, has higher ductility than tempered martensite and thus contributes to enhancement in strength-ductility balance and further to enhancement in strain hardening exponent (n value). When the amount of lower bainite is less than 5%, these effects cannot be obtained sufficiently. Thus, the amount of lower bainite is limited to 5% or more. The lower bainite is preferably 10% or more. When, on the other hand, the amount of lower bainite exceeds 50%, strength is lowered. Thus, the amount of lower bainite is limited to 50% or less. The lower bainite is preferably 40% or less.

Microstructure including one, or two or more of tempered martensite, fresh martensite, upper bainite, lower bainite, and retained austenite: 90% or more (including 100%)

In order to ensure predetermined strength, ductility, and stretch flange formability, the remaining microstructure after the polygonal ferrite has a total area fraction of tempered martensite, fresh martensite, upper bainite, lower bainite, and retained austenite of 90% or more. The remaining microstructure may be a microstructure including one, or two or more of tempered martensite, fresh martensite, upper bainite, lower bainite, and retained austenite, or may be a microstructure consisting of one, or two or more of tempered martensite, fresh martensite, upper bainite, lower bainite, and retained austenite.

Retained austenite: 5 to 20%

In order to ensure high ductility, the volume fraction of retained austenite (retained $\gamma$) is limited to 5% or more of the entire steel microstructure. The retained austenite is preferably 7% or more, and more preferably 9% or more. This amount of retained $\gamma$ includes retained $\gamma$ formed adjacent to bainite. An excessively large amount of retained $\gamma$ invites decreases in strength, stretch flange formability, and delayed fracture resistance. Thus, the volume fraction of retained $\gamma$ is limited to 20% or less. The retained austenite is preferably 15% or less. Incidentally, the "volume fraction" may be regarded as the "area fraction".

Proportion $S_{C \geq 0.5}/S_{C \geq 0.3} \times 100$ of 15% or more where $S_{C \geq 0.5}$ is the area of a region having a C concentration of 0.50% (mass%) or more and $S_{C \geq 0.3}$ is the area of a region having a C concentration of 0.30% (mass%) or more

In order to ensure high ductility, the proportion $S_{C \geq 0.5}/S_{C \geq 0.3} \times 100$ is limited to 15% or more. Here, $S_{C \geq 0.5}$ is the area of a region having a C concentration of 0.50% or more and $S_{C \geq 0.3}$ is the area of a region having a C concentration of 0.30% or more. The proportion is preferably 20% or more, and more preferably 25% or more.

Next, a method for measuring the steel microstructure of the steel sheet of the present invention will be described.

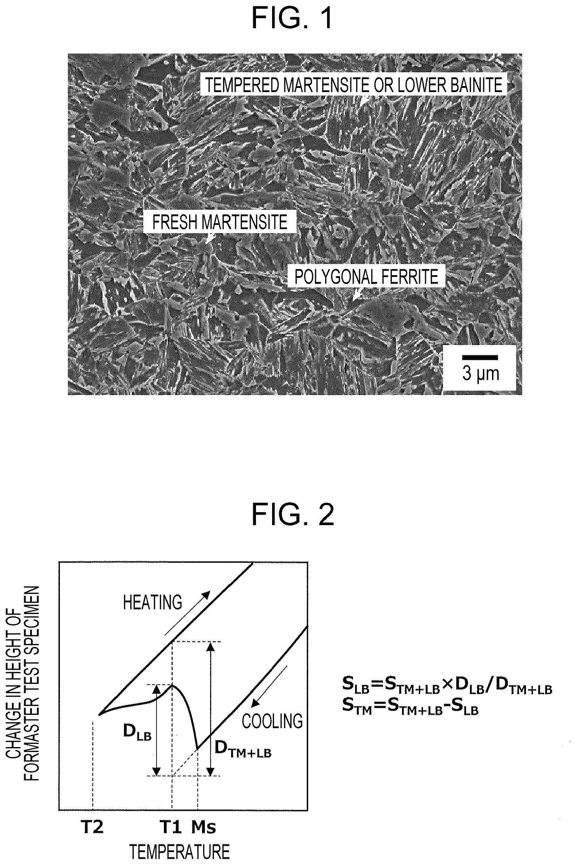

To measure the area fractions of polygonal ferrite, bainitic ferrite, tempered martensite, and fresh martensite, the steel sheet is cut to expose a through-thickness cross section that is perpendicular to the steel sheet surface and is parallel to the rolling direction. The cross section is mirror-polished and is etched with 3 vol% Nital. Portions at 1/4 thickness are observed with SEM in 10 fields of view at a magnification of 5000 times. Fig. 1 illustrates an example SEM image of the steel microstructure of the steel sheet. As illustrated in Fig. 1, the polygonal ferrite discussed here is relatively equiaxed ferrite containing almost no internal carbides. This region looks blackest in SEM.

The total area fraction of tempered martensite and lower bainite is the area fraction $S_{TM+LB}$ of regions that contain a lath-like submicrostructure and carbide precipitates according to SEM. Fresh martensite is a massive region that looks white and does not contain any visible submicrostructures according to SEM.

Because lower bainite and tempered martensite are difficult to distinguish by SEM, their area fractions are measured by a Formaster test as follows. Fig. 2 is a diagram illustrating a Formaster test for measuring the area fractions of tempered martensite and lower bainite.

A cylindrical test specimen (3 mm in diameter $\times$ 10 mm in height) was subjected to a heat treatment with a Formaster tester under predetermined annealing conditions while measuring the change in height of the test specimen. In the cooling process after annealing, a step is performed in which the steel sheet is caused to reside in a range of temperatures from a martensite start temperature Ms to a residence finish temperature T1 (°C) for a residence time t of 5 seconds or more and 60 seconds or less while being cooled at an average cooling rate CR2 of 10°C/s or less.

The expansion that occurs in this step can be regarded as substantially stemming from lower bainite transformation because the expansion by martensite transformation is smaller than the expansion by lower bainite transformation. As illustrated in Fig. 2, the area fraction $S_{LB}$ of lower bainite and the area fraction $S_{TM}$ of tempered martensite are approximately obtained from the equations below in consideration of the influence of thermal contraction by cooling while using the change $D_{LB}$ in height due to lower bainite transformation, the change $D_{TM+LB}$ in height due to martensite transformation and lower bainite transformation, and the total area fraction $S_{TM+LB}$ of tempered martensite and lower bainite obtained by the SEM observation.

$$S_{LB} = S_{TM+LB} \times D_{LB}/D_{TM+LB}$$

$$S_{TM} = S_{TM+LB} - S_{LB}$$

The microstructure including one, or two or more of tempered martensite, fresh martensite, upper bainite, lower bainite, and retained austenite corresponds to the remaining microstructure after the polygonal ferrite, and the total area fraction of this microstructure is the area fraction of the regions other than the polygonal ferrite. Here, the area fraction of carbides is very small and is thus included in the above area fraction of the remaining microstructure.

The volume fraction of retained austenite (retained $\gamma$) is determined by chemically polishing the steel sheet surface to a location at 1/4 thickness and analyzing the sheet surface by X-ray diffractometry. Co-K$\alpha$ radiation source is used as the incident X-ray, and the volume fraction of retained austenite is calculated from the intensity ratio of (200), (211), and (220) planes of ferrite and (200), (220), and (311) planes of austenite. Because retained $\gamma$ is randomly distributed, the volume fraction of retained $\gamma$ obtained by X-ray diffractometry is equal to the area fraction of retained $\gamma$ in the steel microstructure.

The area $S_{C \geq 0.5}$ of a region having a C concentration of 0.50% (mass%) or more and the area $S_{C \geq 0.3}$ of a region having a C concentration of 0.30% (mass%) or more are measured by mapping analysis of the C concentration distribution with respect to positions at 1/4 thickness of a through-thickness cross section perpendicular to the steel sheet surface and parallel to the rolling direction, using field emission electron probe microanalyzer (FE-EPMA) JXA-8500F manufactured by JEOL Ltd., at an acceleration voltage of 6 kV and an illumination current of $7 \times 10^{-8}$ A with the minimum beam diameter.
In order to eliminate the influence of contamination, the background is subtracted so that the average value of carbon obtained by the analysis will be equal to the amount of carbon in the base material. Specifically, when the average of the measured amounts of carbon is greater than the amount of carbon in the base material, the excess is understood as contamination, and the excess is subtracted from each of the values analyzed at the respective positions. The values thus obtained are taken as the true amounts of carbon at the respective positions.

The steel sheet of the present invention preferably has a tensile strength of 980 MPa or more. More preferably, the tensile strength is 1180 MPa or more. The upper limit of the tensile strength is preferably 1450 MPa or less from the point of view of compatibility with other characteristics, and is more preferably 1400 MPa or less.

In the steel sheet of the present invention, the total elongation T-El is 16.0% or more when TS is less than 1180 MPa, 14.0% or more when TS is 1180 MPa or more and less than 1320 MPa, and 13.0% or more when TS is 1320 MPa or more. With this configuration, forming stability is markedly enhanced. It is preferable to ensure that the hole expansion ratio $\lambda$ is 30% or more. From the point of view of compatibility with other characteristics, the upper limit of $\lambda$ is preferably 90% or less, and more preferably 80% or less at any level of strength.

In the steel sheet of the present invention, it is preferable that the strain hardening exponent, n value, be 0.130 or more when TS is less than 1180 MPa, 0.070 or more when TS is 1180 MPa or more and less than 1320 MPa, and 0.060 or more when TS is 1320 MPa or more.

The steel sheet of the present invention described above may be a steel sheet having a galvanized layer on a surface. The galvanized layer may be a hot-dip galvanized layer or an electrogalvanized layer.

Next, a method for manufacturing the steel sheet of the present invention will be described.

In a method for manufacturing the steel sheet of the present invention, a steel slab having the chemical composition described hereinabove is hot rolled and cold rolled. The cold rolled steel sheet obtained is annealed. The annealing includes the following steps in the order named: a step of holding the steel sheet at an annealing temperature of 810 to 900°C; a step of cooling the steel sheet in a range of temperatures from 810°C to a martensite start temperature Ms (°C) at an average cooling rate (CR1) of 5 to 100°C/s; a step of causing the steel sheet to reside in a range of temperatures from the martensite start temperature Ms (°C) to a residence finish temperature (T1) of Ms - 100 to Ms - 10 (°C) for a residence time t of 5 seconds or more and 60 seconds or less while cooling the steel sheet at an average cooling rate (CR2) of 10°C/s or less; a step of cooling the steel sheet in a range of temperatures from the residence finish temperature (T1) to a finish cooling temperature (T2) of 180°C or above and below 290°C at an average cooling rate (CR3) of 3 to 100°C/s; a step of heating the steel sheet in a range of temperatures from the finish cooling temperature (T2) to 380°C at an average heating rate of 2°C/s or more; a step of causing the steel sheet to reside in a range of temperatures of 340°C or above and 590°C or below for 20 seconds or more and 3000 seconds or less while cooling the steel sheet at an average cooling rate (CR4) of 0.01 to 5°C/s; and a step of cooling the steel sheet to a temperature of 50°C or below at an average cooling rate (CR5) of 0.1°C/s or more.

The temperatures specified in the steps in the present invention indicate the surface temperatures of the slab (steel slab) or the steel sheet.

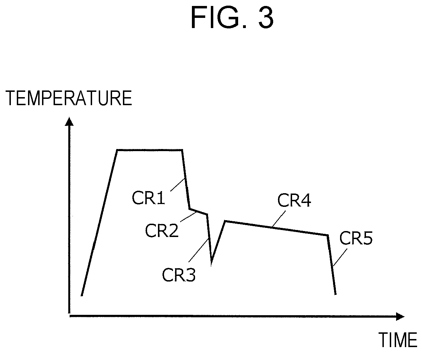

Fig. 3 is a diagram illustrating the method for manufacturing the steel sheet according to the present invention, in particular, indicating changes in surface temperature of the slab (steel slab) or the steel sheet with time. The details of the steps, including the changes in temperature with time, will be described below.

Hot rolling

For example, the steel slab may be hot rolled in such a manner that the slab is heated and then rolled, that the slab from continuous casting is subjected to hot direct rolling without heating, or that the slab from continuous casting is quickly heat treated and then rolled. The hot rolling may be performed in accordance with a conventional procedure. For example, the slab heating temperature may be 1100 to 1300°C; the soaking time may be 20 to 300 minutes; the finish rolling temperature may be $Ar_3$ transformation temperature to $Ar_3$ transformation temperature + 200°C; and the coiling temperature may be 400 to 720°C. In order to eliminate or reduce thickness variations and to ensure high strength stably, the coiling temperature is preferably 430 to 530°C.

Cold rolling

In cold rolling, the rolling reduction ratio (the cumulative rolling reduction ratio) may be 30 to 85%. In order to ensure high strength stably and to reduce anisotropy, the rolling reduction ratio is preferably 35 to 85%. When a high rolling load is incurred, a softening annealing treatment may be performed on CAL (a continuous annealing line) or in BAF (a box annealing furnace) at 450 to 730°C.

Annealing

After the steel slab having the aforementioned chemical composition is hot rolled and cold rolled, the steel sheet is annealed under the conditions specified below. The annealing facility is not particularly limited, but a continuous annealing line (CAL) or a continuous galvanizing line (CGL) is preferable from the points of view of productivity and ensuring the desired heating rate and cooling rate.

Holding at an annealing temperature of 810 to 900°C

In order to ensure the predetermined area fraction of tempered martensite and/or bainite and to ensure the predetermined volume fraction of retained $\gamma$, the annealing temperature is limited to 810 to 900°C. In order to control polygonal ferrite to 5% or less, the annealing temperature is preferably adjusted so that the annealing will take place in the $\gamma$ single-phase region. The annealing temperature is preferably 815°C or above. When, on the other hand, the annealing temperature exceeds 900°C, the $\gamma$ grain size is excessively increased to extend the distance of diffusion of carbon atoms required to obtain retained $\gamma$ having the desired carbon concentration, resulting in a decrease in ductility. Thus, the annealing temperature is limited to 900°C or below. Preferably, the annealing temperature is 880°C or below. Cooling in a range of temperatures from 810°C to a martensite start temperature Ms (°C) at an average cooling rate (CR1) of 5 to 100°C/s

After the steel sheet is held at 810 to 900°C, the steel sheet is cooled in a range of temperatures from 810°C to a martensite start temperature Ms at an average cooling rate (CR1) of 5 to 100°C/s. When the average cooling rate (CR1) is lower than 5°C/s, a large amount of ferrite is formed to cause a decrease in strength and a decrease in stretch flange formability. The average cooling rate (CR1) is preferably 8°C/s or more. When, on the other hand, the average cooling rate is too high, the sheet shape is deteriorated. Thus, the average cooling rate is limited to 100°C/s or less. The average cooling rate (CR1) is preferably 500°C/s or less, and more preferably less than 30°C/s.

Here, the average cooling rate (CR1) is "(810°C (cooling start temperature) - martensite start temperature Ms (finish cooling temperature))/(cooling time (seconds) from cooling start temperature 810°C to martensite start temperature Ms (finish cooling temperature))".

The martensite start temperature Ms (°C) can be determined using a Formaster tester by holding a cylindrical test specimen (3 mm in diameter × 10 mm in height) at a predetermined annealing temperature and quenching the test specimen with helium gas while measuring the volume change.

Residence in a range of temperatures from the martensite start temperature Ms to a residence finish temperature (T1) of Ms - 100 to Ms - 10 (°C) for a residence time t of 5 seconds or more and 60 seconds or less while performing cooling at an average cooling rate (CR2) of 10°C/s or less

The steel sheet is caused to reside (is gradually cooled) in a range of temperatures from the martensite start temperature Ms (°C) to a residence finish temperature (T1) of Ms - 100 to Ms - 10 (°C) for a residence time t of 5 seconds or more and 60 seconds or less while being cooled at an average cooling rate (CR2) of 10°C/s or less. In this manner, martensite is partly formed, and subsequently bainite can be formed from the martensite as a nucleus. The bainite transformation is accelerated by the swing back effect, and a predetermine amount of lower bainite can be formed efficiently in a short time. When the average cooling rate (CR2) exceeds 10°C/s, the amount of bainite transformation is reduced. Thus, the average cooling rate (CR2) is limited to 10°C/s or less. When the residence time is less than 5 seconds, the desired amount of bainite cannot be obtained. When the residence time exceeds 60 seconds, the enrichment of carbon from bainite to massive non-transformed γ proceeds to result in an increase in the residual amount of the massive microstructure. Thus, the residence time is limited to 5 seconds or more and 60 seconds or less. In order to ensure bainitic ferrite and retained austenite and to enhance ductility, the residence time is preferably 10 seconds or more. In order to reduce the formation of massive microstructures and thereby to enhance λ, the residence time is preferably 50 seconds or less.

The martensite start temperature Ms (°C), the residence finish temperature (T1), the average cooling rate (CR2), and the residence time t (seconds) satisfy the equation (1) below:

$$T1 = Ms - CR2 \times t \cdots Equation\ (1)$$

That is, the average cooling rate (CR2) is "(martensite start temperature Ms (°C) (residence start temperature) - residence finish temperature (T1))/(residence time t (seconds) from martensite start temperature Ms (°C) to residence finish temperature T1)".

Cooling in a range of temperatures from the residence finish temperature (T1) to a finish cooling temperature (T2) of 180°C or above and below 290°C at an average cooling rate (CR3) of 3 to 100°C/s

After the above residence, the steel sheet needs to be cooled rapidly to avoid excessive progress of carbon enrichment into γ. When the average cooling rate (CR3) in the range of temperatures from the residence finish temperature T1 to the finish cooling temperature T2 of 180°C or above and below 290°C is less than 3°C/s, carbon is concentrated into massive non-transformed γ and an increased amount of fresh martensite is formed during the final cooling to cause a decrease in stretch flange formability. From the point of view of enhancing stretch flange formability, the average cooling rate (CR3) is limited to 3°C/s or more. The average cooling rate (CR3) is more preferably 5°C/s or more, and still more preferably 8°C/s or more. When the average cooling rate in the above temperature range is excessively high, the sheet shape is deteriorated. Thus, the average cooling rate (CR3) is limited to 100°C/s or less. The average cooling rate (CR3) is preferably 50°C/s or less. In order to ensure a predetermined amount of retained γ, the finish cooling temperature is limited to 180°C or above. The finish cooling temperature is preferably 200°C or above, and more preferably 220°C or above. When the finish cooling temperature is 290°C or more, a large amount of massive non-transformed γ remains and an increased amount of fresh martensite is formed during the final cooling to cause a decrease in stretch flange formability. Thus, the finish cooling temperature is limited to below 290°C. The finish cooling temperature is preferably 280°C or below.

Here, the average cooling rate (CR3) is "(residence finish temperature (T1)) - (finish cooling temperature (T2) (°C))/(cooling time (seconds) from residence finish temperature (T1) to finish cooling temperature (T2))".

Heating in a range of temperatures from the finish cooling temperature (T2) to 380°C at an average heating rate of 2°C/s or more

Furthermore, the steel sheet is heated in a range of temperatures from the finish cooling temperature (T2) to 380°C in a short time. In this manner, the precipitation of carbides is suppressed and high ductility can be ensured. When the steel sheet is reheated to 380°C or above, bainite is formed from martensite or bainite as nucleus that has been formed during cooling. When the average heating rate during heating to 380°C is low, the above effects cannot be obtained. As a result, the amount of retained γ is reduced and ductility is lowered. Thus, the average heating rate in the range of temperatures from the finish cooling temperature (T2) to 380°C is limited to 2°C/s or more. From the points of view of suppressing carbide precipitation and forming bainite at the time of reheating, the average heating rate is preferably 5°C/s or more, and more preferably 10°C/s or more. The upper limit of the average heating rate is not particularly limited but is preferably 50°C/s or less, and more preferably 30°C/s or less.

Here, the average heating rate is "380°C (heating stop temperature) - (finish cooling temperature (T2))/(heating time (seconds) from finish cooling temperature (T2) to 380°C (heating stop temperature))".

Residence in a range of temperatures of 340°C or above and 590°C or below for 20 seconds or more and 3000 seconds or less while performing cooling at an average cooling rate (CR4) of 0.01 to 5°C/s

In order to partition carbon to retained γ and stabilize the retained γ and in order to divide massive regions distributed as non-transformed γ by bainite transformation and thereby to enhance stretch flange formability, the steel sheet is caused to reside (is gradually cooled) in a range of temperatures of 340°C or above and 590°C or below for 20 seconds or more and 3000 seconds or less. Furthermore, in order to enhance stretch flange formability by eliminating or reducing the formation of massive microstructures due to excessive partitioning of carbon to retained γ and also by causing self-tempering of fresh martensite, the steel sheet is cooled slowly in this temperature range at an average cooling rate (CR4) of 0.01 to 5°C/s. When the average cooling rate (CR4) is less than 0.01°C/s, carbon is excessively partitioned to retained γ and massive microstructures are formed to cause a decrease in stretch flange formability. Thus, the average cooling rate (CR4) is limited to 0.01°C/s or more. When, on the other hand, the average cooling rate (CR4) exceeds 5°C/s, the partitioning of carbon to retained γ is suppressed and a sufficient amount of carbon-enriched regions cannot be obtained. Furthermore, fresh martensite is formed to cause a decrease in λ. Thus, the average cooling rate (CR4) is limited to 5°C/s or less.

Here, the average cooling rate (CR4) is "(cooling start temperature (T3) (°C)) - (finish cooling temperature (T4) (°C))/(cooling time (seconds) from cooling start temperature (T3) (°C) to finish cooling temperature (T4) (°C))". Here, the cooling start temperature (T3) and the finish cooling temperature (T4) are not particularly limited as long as they are in the range of 340°C or above and 590°C or below. The cooling start temperature (T3) is preferably in the range of 360 to 580°C. The finish cooling temperature (T4) is preferably in the range of 350 to 450°C.

The holding (residence) in the temperature range of 340 to 590°C may also include a hot-dip galvanizing treatment. That is, the steel sheet may be subjected to a hot-dip galvanizing treatment or a hot-dip galvannealing treatment in the step where the steel sheet is caused to reside while being cooled at an average cooling rate (CR4) of 0.01 to 5°C/s. When a hot-dip galvanizing treatment is performed, the steel sheet is hot-dip galvanized by being immersed into a galvanizing bath at 440°C or above and 500°C or below, and the coating weight is preferably adjusted by, for example, gas wiping. The galvanizing bath used in the hot-dip galvanization preferably has an Al content of 0.10% or more and 0.22% or less. Furthermore, a hot-dip galvannealing treatment may be performed by an alloying treatment of the zinc coating after the hot-dip galvanizing treatment. The alloying treatment of the zinc coating is preferably performed in a temperature range of 470°C or above and 590°C or below.

Although this step is a cooling step (residence and slow cooling), the hot-dip galvanizing treatment and the alloying treatment of the zinc coating may be performed during the step as long as the temperature range, the residence time, and the average cooling rate CR4 described above are satisfied. The hot-dip galvanizing treatment and the alloying treatment of the zinc coating may involve a temperature rise.

Cooling to a temperature of 50°C or below at an average cooling rate (CRS) of 0.1°C/s or more

In order to prevent softening due to excessive tempering and to avoid a decrease in ductility due to carbide precipitation, the steel sheet is then cooled to a temperature of 50°C or below at an average cooling rate (CRS) of 0.1°C/s or more. In order to stabilize press formability, for example, to control surface roughness and to flatten the sheet shape, and also in order to increase the YS, the steel sheet may be subjected to skin pass rolling. The skin pass rolling reduction ratio is preferably 0.1 to 0.5%. The sheet shape may be flattened with a leveler. The average cooling rate (CRS) to a temperature of 50°C or below is preferably 5°C/s or more, and more preferably 100°C/s or less.

Here, the average cooling rate (CRS) is "(340°C (cooling start temperature (°C)) - finish cooling temperature (°C) of 50°C or below)/(cooling time (seconds) from cooling start temperature to finish cooling temperature)".

In order to improve stretch flange formability, the above heat treatment or the skin pass rolling may be followed by a low-temperature heat treatment at 100 to 300°C for 30 seconds to 10 days. This treatment tempers martensite that has been formed during the final cooling or the skin pass rolling and detaches from the steel sheet hydrogen that has penetrated into the steel sheet during annealing. By the low-temperature heat treatment, hydrogen can be reduced to less than 0.1 ppm. Furthermore, electroplating may be performed. That is, the steel sheet may be electrogalvanized after the step where the steel sheet is cooled at an average cooling rate (CRS) of 0.1°C/s or more. The electrogalvanization is preferably followed by the above low-temperature heat treatment in order to reduce the amount of hydrogen in the steel.

The steel sheet of the present invention preferably has a thickness of 0.5 mm or more. The thickness is preferably 2.0 mm or less.

Next, a member and a method for manufacture thereof according to the present invention will be described.

The member of the present invention is obtained by subjecting the steel sheet of the present invention to at least one working of forming and joining. The method for manufacturing a member of the present invention includes a step of subjecting the steel sheet of the present invention to at least one working of forming and joining to produce a member.

The steel sheet of the present invention has a tensile strength of 980 MPa or more and also has high ductility, excellent stretch flange formability, and high strain hardening exponent. Thus, the member that is obtained using the steel sheet of the present invention also has high strength and has high ductility, excellent stretch flange formability, and high strain hardening exponent compared to the conventional high-strength members. Furthermore, weight can be reduced by using the member of the present invention. Thus, for example, the member of the present invention may be suitably used in an automobile body frame part. The member of the present invention also includes a welded joint.

The forming may be performed using any common working process, such as press working, without limitation. Furthermore, the joining may be performed using common welding, such as spot welding or arc welding, or, for example, riveting or crimping without limitation.

EXAMPLES

EXAMPLES of the present invention will be described below.

Steel sheets of the present invention and steel sheets of COMPARATIVE EXAMPLES were manufactured by treating 1.4 mm thick cold rolled steel sheets having a chemical composition described in Table 1 under annealing conditions described in Table 2.

The cold rolled steel sheets had been obtained by subjecting steel slabs having the chemical composition described in Table 1 to hot rolling (slab heating temperature: 1200°C, soaking time: 60 minutes, finish rolling temperature: 900°C, coiling temperature: 500°C) and cold rolling (rolling reduction ratio (cumulative rolling reduction ratio): 50%). In Table 2, the martensite start temperature Ms was obtained using a Formaster tester by holding a cylindrical test piece (3 mm in diameter × 10 mm in height) at a predetermined annealing temperature and quenching the test piece with helium gas while measuring the volume change.

Some of the steel sheets (cold rolled steel sheets: CR) were obtained as hot-dip galvanized steel sheets (GI) by being hot-dip galvanized in a step where the steel sheet was caused to reside in a range of temperatures of 340°C or above and 590°C or below for 20 seconds or more and 3000 seconds or less while being cooled at an average cooling rate of 0.01 to 5°C/s. Here, the steel sheets were hot-dip galvanized by being immersed into a galvanizing bath at a temperature of 440°C or above and 500°C or below, and the coating weight was adjusted by, for example, gas wiping. The galvanizing bath used in the hot-dip galvanization had an Al content of 0.10% or more and 0.22% or less. Furthermore, some of the hot-dip galvanized steel sheets were alloyed and obtained as hot-dip galvannealed steel sheets (GA) by being subjected to an alloying treatment after the hot-dip galvanizing treatment. Here, the alloying treatment was performed in a range of temperatures of 460°C or above and 590°C or below. Furthermore, some of the steel sheets (cold rolled steel sheets: CR) were obtained as electrogalvanized steel sheets (EG) by electroplating.

The steel microstructure was measured in the following manner. The measurement results are described in Table 3.

To measure the area fractions of polygonal ferrite, bainitic ferrite, tempered martensite, and fresh martensite, the steel sheet was cut to expose a through-thickness cross section that was perpendicular to the steel sheet surface and was parallel to the rolling direction. The cross section was mirror-polished and was etched with 3 vol% Nital. Portions at 1/4 thickness were observed with SEM in 10 fields of view at a magnification of 5000 times. As illustrated in Fig. 1, the polygonal ferrite discussed here is relatively equiaxed ferrite containing almost no internal carbides. This region looks blackest in SEM. The total area fraction of tempered martensite and lower bainite is the area fraction $S_{TM+LB}$ of regions that contain a lath-like submicrostructure and carbide precipitates according to SEM. Fresh martensite is a massive region that looks white and does not contain any visible submicrostructures according to SEM.

Because lower bainite and tempered martensite were difficult to distinguish by SEM, their area fractions were measured by a Formaster test as follows. A cylindrical test specimen (3 mm in diameter × 10 mm in height) was subjected to a heat treatment with a Formaster tester under predetermined annealing conditions while measuring the change in height of the test specimen. In the cooling process after annealing, a step is performed in which the steel sheet is caused to reside in a range of temperatures from a martensite start temperature Ms to a residence finish temperature T1 (°C) for a residence time t of 5 seconds or more and 60 seconds or less while being cooled at an average cooling rate CR2 of 10°C/s or less. The expansion that occurs in this step can be regarded as substantially stemming from lower bainite transformation because the expansion by martensite transformation is smaller than the expansion by lower bainite transformation. As illustrated in Fig. 2, the area fraction $S_{LB}$ of lower bainite and the area fraction $S_{TM}$ of tempered martensite were approximately obtained from the equations below in consideration of the influence of thermal contraction by cooling while using the change $D_{LB}$ in height due to lower bainite transformation, the change $D_{TM+LB}$ in height due to martensite transformation and lower bainite transformation, and the total area fraction $S_{TM+LB}$ of tempered martensite and lower bainite obtained by the SEM observation.

$$S_{LB} = S_{TM+LB} \times D_{LB}/D_{TM+LB}$$

$$S_{TM} = S_{TM+LB} - S_{LB}$$

The microstructure including one, or two or more of tempered martensite, fresh martensite, upper bainite, lower bainite, and retained austenite corresponds to the remaining microstructure after the polygonal ferrite, and the total area fraction of this microstructure is the area fraction of the regions other than the polygonal ferrite. Here, the area fraction of carbides was very small and was thus included in the above area fraction of the remaining microstructure.

The volume fraction of retained austenite (retained $\gamma$) was determined by chemically polishing the steel sheet surface to a location at 1/4 thickness and analyzing the sheet surface by X-ray diffractometry. Co-K$\alpha$ radiation source was used as the incident X-ray, and the volume fraction of retained austenite was calculated from the intensity ratio of (200), (211), and (220) planes of ferrite and (200), (220), and (311) planes of austenite. Because retained $\gamma$ is randomly distributed, the volume fraction of retained $\gamma$ obtained by X-ray diffractometry is equal to the area fraction of retained $\gamma$ in the steel microstructure.

The area $S_{C \geq 0.5}$ of a region having a C concentration of 0.50% (mass%) or more and the area $S_{C \geq 0.3}$ of a region having a C concentration of 0.30% (mass%) or more were measured by mapping analysis of the C concentration distribution with respect to positions at 1/4 thickness of a through-thickness cross section perpendicular to the steel sheet surface and parallel to the rolling direction, using field emission electron probe microanalyzer (FE-EPMA) JXA-8500F manufactured by JEOL Ltd., at an acceleration voltage of 6 kV and an illumination current of $7 \times 10^{-8}$ A with the minimum beam diameter.

In order to eliminate the influence of contamination, the background was subtracted so that the average value of carbon obtained by the analysis would be equal to the amount of carbon in the base material. Specifically, when the average of the measured amounts of carbon was greater than the amount of carbon in the base material, the excess was understood as contamination, and the excess was subtracted from each of the values analyzed at the respective positions. The values thus obtained were taken as the true amounts of carbon at the respective positions.

JIS No. 5 test pieces for tensile test were sampled from the steel sheets obtained. A tensile test was performed (in accordance with JIS Z2241). The tensile strength TS and the total elongation T-El obtained by the tensile test, and the n value of strain hardening exponent are described in Table 3. The steel sheets were evaluated as being excellent in strength when the tensile strength was 980 MPa or more. Furthermore, the ductility was evaluated as excellent when the total elongation T-El was 16.0% or more for the steel sheets having a TS of less than 1180 MPa, when the total elongation T-El was 14.0% or more for the steel sheets having a TS of 1180 MPa or more and less than 1320 MPa, and when the total elongation T-El was 13.0% or more for the steel sheets having a TS of 1320 MPa or more.

Furthermore, the n value of strain hardening exponent was calculated by a simple process in which the strain hardening exponent was obtained from two points on a nominal stress-nominal strain curve where the nominal strain was 2% and 5% in accordance with JIS Z2253. The steel sheets were evaluated as having a high strain hardening exponent when the n value was 0.130 or more for the steel sheets having a TS of less than 1180 MPa, when the n value was 0.070 or more for the steel sheets having a TS of 1180 MPa or more and less than 1320 MPa, and when the n value was 0.060 or more for the steel sheets having a TS of 1320 MPa or more.

Furthermore, test pieces for hole expansion test were sampled from the steel sheets after the heat treatment and were subjected to a hole expansion test conforming to the provisions of The Japan Iron and Steel Federation Standard JFST 1001 to evaluate stretch flange formability. Specifically, a 100 mm × 100 mm square sample was punched with a punching tool having a punch diameter of 10 mm and a die diameter of 10.3 mm (13% clearance), and a conical punch having an apex angle of 60 degrees was inserted into the hole in such a manner that the burr produced at the time of punching would be directed to the outside. The hole was expanded until the sheet was cracked through the thickness. The hole expansion ratio $\lambda$ (%) = {(d - d$_0$)/d$_0$} × 100 was calculated. Here, d$_0$: initial hole diameter (mm), and d: hole diameter (mm) at the occurrence of cracking. The results are described in Table 3. The steel was evaluated as having excellent flangeability when $\lambda$ was 30% or more.

INVENTIVE EXAMPLES described in Tables 2 and 3 attained excellent strength, ductility, flangeability, and strain hardening exponent. In contrast, COMPARATIVE EXAMPLES were unsatisfactory in one or more of these properties.

[Table 1]

| Steel | Chemical composition (mass%) | | | | | | | | Remarks |
|---|---|---|---|---|---|---|---|---|---|
| | C | Si | Mn | P | S | sol.Al | N | others | |
| A | 0.125 | 0.66 | 3.04 | 0.007 | 0.0004 | 0.050 | 0.0037 | - | Compliant steel |
| B | 0.269 | 1.16 | 2.25 | 0.006 | 0.0011 | 0.072 | 0.0031 | - | Comparative steel |
| C | 0.108 | 1.24 | 2.58 | 0.003 | 0.0011 | 0.094 | 0.0030 | Ti:0.025, B:0.0041 | Compliant steel |
| D | 0.134 | 0.32 | 2.42 | 0.004 | 0.0004 | 0.091 | 0.0040 | - | Comparative steel |

(continued)

| Steel | Chemical composition (mass%) | | | | | | | | Remarks |
|---|---|---|---|---|---|---|---|---|---|
| | C | Si | Mn | P | S | sol.Al | N | others | |
| E | 0.198 | 1.86 | 2.51 | 0.011 | 0.0006 | 0.068 | 0.0035 | Ti:0.020, B:0.0045, Nb:0.029 | Compliant steel |
| F | 0.193 | 1.68 | <u>1.34</u> | 0.004 | 0.0013 | 0.017 | 0.0035 | - | Comparative steel |
| G | 0.232 | 2.35 | 1.61 | 0.006 | 0.0010 | 0.034 | 0.0053 | Ti:0.037, B:0.0010, Cu:0.12, Ni:0.06, Cr: 0.06, Mo:0.06 | Compliant steel |
| H | 0.173 | 1.67 | 3.02 | 0.012 | 0.0009 | 0.061 | 0.0040 | V:0.019, Zr:0.010, W: 0.010 | Compliant steel |
| I | <u>0.047</u> | 1.37 | 2.69 | 0.008 | 0.0013 | 0.011 | 0.0062 | - | Comparative steel |
| J | 0.190 | 0.62 | 3.36 | 0.005 | 0.0011 | 0.062 | 0.0050 | Ti:0.028, B:0.0032, Ca:0.0012, Ce: 0.0006, La:0.0020 | Compliant steel |
| K | 0.208 | 1.95 | 2.63 | 0.013 | 0.0006 | 0.063 | 0.0033 | B:0.0040, Mg: 0.0020, Sb:0.01, Sn: 0.01 | Compliant steel |
| L | 0.164 | <u>2.64</u> | 3.45 | 0.009 | 0.0010 | 0.020 | 0.0027 | - | Comparative steel |
| M | 0.180 | 2.42 | <u>3.65</u> | 0.014 | 0.0008 | 0.033 | 0.0030 | - | Comparative steel |

*Underlines indicate being outside of the range of the present invention.
*The balance after the above components is Fe and incidental impurities.

[Table 2]

| No. | Steel | Annealing temp. (°C) | CR1*1 (°C/s) | Ms (°C) | CR2*2 (°C/s) | Residence time*3 (sec) | Residence finish temp. T1 (°C) | CR3*4 (°C/s) | Finish cooling temp. T2 (°C) | Heating rate*5 (°C/s) | CR4*6 (°C/s) | Residence time*7 (sec) | Cooling start temp. T3 (°C) | Finish cooling temp. T4 (°C) | CR5*8 (°C/s) | Plating*9 | Remarks |
|---|---|---|---|---|---|---|---|---|---|---|---|---|---|---|---|---|---|
| 1 | A | 820 | 30 | 330 | 1 | 60 | 270 | 3 | 220 | 3 | 0.01 | 2800 | 380 | 352 | 5 | CR | INV. EX. |
| 2 | A | 875 | 20 | 355 | 1 | 40 | 315 | 5 | 280 | 6 | 0.03 | 1500 | 420 | 375 | 5 | CR | INV. EX. |
| 3 | A | 805 | 30 | 315 | 1 | 40 | 275 | 5 | 250 | 6 | 0.03 | 1500 | 420 | 375 | 5 | CR | COMP. EX. |
| 4 | A | 905 | 30 | 355 | 1 | 30 | 325 | 5 | 250 | 6 | 0.03 | 1500 | 420 | 375 | 5 | CR | COMP. EX. |
| 5 | B | 830 | 30 | 330 | 1 | 30 | 300 | 5 | 260 | 6 | 0.03 | 1500 | 420 | 375 | 5 | CR | COMP. EX. |
| 6 | C | 845 | 6 | 369 | 3 | 20 | 309 | 8 | 260 | 15 | 0.03 | 500 | 400 | 385 | 5 | CR | INV. EX. |
| 7 | C | 815 | 10 | 345 | 3 | 20 | 285 | 10 | 185 | 15 | 0.03 | 500 | 400 | 385 | 5 | CR | INV. EX. |
| 8 | C | 830 | 3 | 330 | 3 | 20 | 270 | 10 | 260 | 15 | 0.03 | 500 | 400 | 385 | 5 | CR | COMP. EX. |
| 9 | C | 830 | 10 | 340 | 12 | 10 | 220 | 10 | 200 | 15 | 0.03 | 500 | 400 | 385 | 5 | CR | COMP. EX. |
| 10 | D | 830 | 10 | 375 | 3 | 15 | 330 | 10 | 220 | 15 | 0.03 | 500 | 400 | 385 | 5 | CR | COMP. EX. |
| 11 | E | 830 | 20 | 337 | 3 | 5 | 322 | 10 | 250 | 15 | 0.05 | 700 | 450 | 415 | 5 | CR | INV. EX. |
| 12 | E | 860 | 20 | 340 | 3 | 15 | 295 | 10 | 280 | 20 | 0.05 | 700 | 450 | 415 | 5 | CR | INV. EX. |
| 13 | E | 860 | 20 | 340 | 3 | 3 | 331 | 10 | 220 | 20 | 0.05 | 700 | 450 | 415 | 5 | CR | COMP. EX. |
| 14 | E | 860 | 20 | 340 | 1 | 70 | 270 | 10 | 250 | 20 | 0.05 | 700 | 450 | 415 | 5 | CR | COMP. EX. |
| 15 | F | 820 | 20 | 370 | 3 | 15 | 325 | 10 | 280 | 20 | 0.05 | 700 | 450 | 415 | 5 | CR | COMP. EX. |
| 16 | G | 810 | 20 | 325 | 3 | 15 | 280 | 10 | 230 | 20 | 0.07 | 900 | 550 | 487 | 5 | GA | INV. EX. |

Annealing conditions

| No. | Steel | Annealing conditions | | | | | | | | | | | | | | | Remarks |
| | | Annealing temp. (°C) | CR1 *1 (°C/s) | Ms (°C) | CR2 *2 (°C/s) | Residence time*3 (sec) | Residence finish temp. T1 (°C) | CR3*4 (°C/s) | Finish cooling temp. T2 (°C) | Heating rate *5 (°C/s) | CR4 *6 (°C/s) | Residence time*7 (sec) | Cooling start temp. T3 (°C) | Finish cooling temp. T4 (°C) | CR5*8 (°C/s) | Plating*9 | |
| 17 | G | 840 | 20 | 350 | 3 | 15 | 305 | 10 | 260 | 20 | 0.07 | 900 | 550 | 487 | 5 | GA | INV. EX. |
| 18 | G | 840 | 20 | 350 | 3 | 15 | 305 | 1 | 280 | 20 | 0.07 | 900 | 550 | 487 | 5 | GA | COMP. EX. |
| 19 | G | 840 | 20 | 350 | 3 | 15 | 305 | 10 | 175 | 20 | 0.07 | 900 | 550 | 487 | 5 | GA | COMP. EX. |
| 20 | H | 890 | 50 | 330 | 5 | 10 | 280 | 10 | 250 | 20 | 0.20 | 600 | 500 | 380 | 80 | GI | INV. EX. |
| 21 | H | 890 | 50 | 330 | 5 | 10 | 280 | 20 | 250 | 20 | 0.20 | 600 | 500 | 380 | 10 | GI | INV. EX. |
| 22 | H | 840 | 50 | 325 | 1 | 10 | 315 | 20 | 310 | 20 | 0.20 | 600 | 500 | 380 | 10 | GI | COMP. EX. |
| 23 | H | 840 | 50 | 325 | 5 | 10 | 275 | 20 | 240 | 1 | 0.20 | 600 | 500 | 380 | 10 | GI | COMP. EX. |
| 24 | I | 850 | 50 | 383 | 5 | 10 | 333 | 20 | 250 | 20 | 0.20 | 600 | 500 | 380 | 10 | GI | COMP. EX. |
| 25 | J | 850 | 60 | 330 | 5 | 10 | 280 | 30 | 260 | 20 | 0.80 | 150 | 585 | 465 | 10 | EG | INV. EX. |
| 26 | J | 850 | 60 | 330 | 5 | 10 | 280 | 30 | 260 | 20 | 0.85 | 150 | 585 | 458 | 10 | EG | INV. EX. |
| 27 | J | 815 | 60 | 320 | 5 | 10 | 270 | 30 | 230 | 20 | 0.00 | 100 | 350 | 350 | 10 | EG | COMP. EX. |
| 28 | J | 850 | 60 | 330 | 5 | 10 | 280 | 30 | 220 | 20 | 10 | 30 | 480 | 180 | 10 | EG | COMP. EX. |
| 29 | K | 810 | 80 | 310 | 10 | 5 | 260 | 50 | 210 | 20 | 1.50 | 50 | 500 | 425 | 1 | CR | INV. EX. |
| 30 | K | 810 | 95 | 310 | 10 | 5 | 260 | 80 | 240 | 20 | 300 | 30 | 500 | 410 | 1 | CR | INV. EX. |
| 31 | K | 860 | 95 | 330 | 10 | 5 | 280 | 80 | 230 | 20 | 400 | 10 | 430 | 390 | 1 | EG | COMP. EX. |
| 32 | K | 830 | 95 | 325 | 10 | 5 | 275 | 80 | 250 | 20 | 0.01 | 3200 | 390 | 358 | 1 | EG | COMP. EX. |

(continued)

| No. | Steel | Annealing conditions | | | | | | | | | | | | | | | Plating*9 | Remarks |
|---|---|---|---|---|---|---|---|---|---|---|---|---|---|---|---|---|---|---|
| | | Annealing temp. (°C) | CR1*1 (°C/s) | Ms (°C) | CR2 *2 (°C/s) | Residence time*3 (sec) | Residence finish temp. T1 (°C) | CR3*4 (°C/s) | Finish cooling temp. T2 (°C) | Heating rate *5 (°C/s) | CR4 *6 (°C/s) | Residence time*7 (sec) | Cooling start temp. T3 (°C) | Finish cooling temp. T4 (°C) | CR5*8 (°C/s) | | | |
| 33 | L̲ | 830 | 95 | 305 | 1 | 5 | 300̲ | 80 | 280 | 20 | 0.07 | 900 | 440 | 377 | 1 | | EG | COMP. EX. |
| 34 | M̲ | 830 | 95 | 295 | 1 | 5 | 280 | 80 | 250 | 20 | 0.07 | 900 | 440 | 377 | 1 | | EG | COMP. EX. |

*Underlines indicate being outside of the range of the present invention.
*1: Average cooling rate CR1 in range of temperatures from 810°C to martensite start temperature Ms
*2: Average cooling rate CR2 in range of temperatures from martensite start temperature Ms to residence finish temperature T1 (°C)
*3: Residence time in range of temperatures from martensite start temperature Ms to residence finish temperature T1 (°C)
*4: Average cooling rate CR3 in range of temperatures from residence finish temperature T1 (°C) to finish cooling temperature T2 (°C) of 180°C or above and below 290°C
*5: Average heating rate in range of temperatures from finish cooling temperature T2 to 380°C
*6: Average cooling rate CR4 in range of temperatures of 340°C or above and 590°C or below
*7: Residence time in range of temperatures of 340°C or above and 590°C or below
*8: Average cooling rate CR5 to temperature of 50°C or below
*9: CR: no plating, GA: hot-dip galvannealed steel sheet, GI: hot-dip galvanized steel sheet (no alloying treatment of zinc coating), EG: electrogalvanized steel sheet

[Table 3]

| No. | Steel | Microstructure | | | | | | | Characteristics | | | | Remarks |
|---|---|---|---|---|---|---|---|---|---|---|---|---|---|
| | | Polygonal ferrite area fraction (%) | Tempered martensite area fraction (%) | Fresh martensite area fraction (%) | Lower bainite area fraction (%) | Remaining microstructure*10 area fraction (%) | Retained $\gamma$ volume fraction (%) | $S_{C \geq 0.5}/S_{C \geq 0.3}$ (%) | TS (MPa) | T-El (%) | n value (2%-5%) | $\lambda$ (%) | |
| 1 | A | 7 | 34 | 7 | 43 | 93 | 9 | 33 | 993 | 18.9 | 0.155 | 52 | INV. EX. |
| 2 | A | 0 | 47 | 5 | 40 | 100 | 8 | 32 | 1005 | 18.0 | 0.147 | 56 | INV. EX. |
| 3 | A | 12 | 42 | 22 | 18 | 88 | 6 | 30 | 968 | 18.5 | 0.125 | 26 | COMP. EX. |
| 4 | A | 0 | 54 | 4 | 35 | 100 | 7 | 12 | 1130 | 15.5 | 0.130 | 65 | COMP. EX. |
| 5 | B | 2 | 58 | 16 | 12 | 98 | 12 | 41 | 1435 | 5.2 | 0.062 | 22 | COMP. EX. |
| 6 | C | 3 | 48 | 7 | 35 | 97 | 7 | 29 | 1057 | 17.6 | 0.142 | 66 | INV. EX. |
| 7 | C | 7 | 42 | 8 | 34 | 93 | 9 | 30 | 1075 | 16.5 | 0.138 | 61 | INV. EX. |
| 8 | C | 12 | 51 | 14 | 14 | 88 | 9 | 26 | 962 | 19.4 | 0.133 | 45 | COMP. EX. |
| 9 | C | 4 | 76 | 9 | 3 | 96 | 8 | 13 | 1042 | 15.5 | 0.088 | 52 | COMP. EX. |
| 10 | D | 6 | 71 | 5 | 15 | 94 | 3 | 18 | 1072 | 15.0 | 0.115 | 55 | COMP. EX. |
| 11 | E | 1 | 53 | 4 | 30 | 99 | 10 | 28 | 1221 | 17.3 | 0.081 | 52 | INV. EX. |
| 12 | E | 0 | 49 | 16 | 29 | 100 | 6 | 15 | 1258 | 15.3 | 0.079 | 45 | INV. EX. |
| 13 | E | 1 | 87 | 2 | 3 | 99 | 7 | 13 | 1267 | 13.6 | 0.057 | 61 | COMP. EX. |
| 14 | E | 1 | 17 | 23 | 52 | 99 | 7 | 33 | 1185 | 16.7 | 0.073 | 25 | COMP. EX. |
| 15 | F | 13 | 65 | 8 | 10 | 87 | 4 | 17 | 1130 | 16.8 | 0.071 | 33 | COMP. EX. |

| No. | Steel | Microstructure | | | | | | | Characteristics | | | | Remarks |
|---|---|---|---|---|---|---|---|---|---|---|---|---|---|
| | | Polygonal ferrite area fraction (%) | Tempered martensite area fraction (%) | Fresh martensite area fraction (%) | Lower bainite area fraction (%) | Remaining microstructure*10 area fraction (%) | Retained $\gamma$ volume fraction (%) | $S_{C\geq0.5}/S_{C\geq0.3}$ (%) | TS (MPa) | T-El (%) | n value (2%-5%) | $\lambda$ (%) | |
| 16 | G | 5 | 45 | 4 | 30 | 95 | 16 | 31 | 1323 | 14.6 | 0.063 | 59 | INV. EX. |
| 17 | G | 2 | 48 | 6 | 28 | 98 | 11 | 28 | 1340 | 14.1 | 0.061 | 56 | INV. EX. |
| 18 | G | 2 | 19 | 22 | 53 | 98 | 4 | 30 | 1331 | 12.7 | 0.063 | 23 | COMP. EX. |
| 19 | G | 2 | 75 | 3 | 18 | 98 | 2 | 20 | 1401 | 12.1 | 0.060 | 40 | COMP. EX. |
| 20 | H | 0 | 60 | 12 | 18 | 100 | 10 | 23 | 1268 | 16.3 | 0.078 | 52 | INV. EX. |
| 21 | H | 0 | 64 | 9 | 17 | 100 | 10 | 22 | 1231 | 16.9 | 0.080 | 61 | INV. EX. |
| 22 | H | 1 | 55 | 23 | 13 | 99 | 8 | 19 | 1271 | 13.4 | 0.068 | 27 | COMP. EX. |
| 23 | H | 1 | 73 | 15 | 8 | 99 | 3 | 22 | 1255 | 13.5 | 0.072 | 35 | COMP. EX. |
| 24 | I | 39 | 39 | 4 | 17 | 61 | 1 | 11 | 571 | 18.7 | 0.188 | 54 | COMP. EX. |
| 25 | J | 1 | 71 | 6 | 13 | 99 | 9 | 27 | 1236 | 16.2 | 0.076 | 60 | INV. EX. |
| 26 | J | 1 | 60 | 7 | 15 | 99 | 12 | 28 | 1231 | 17.3 | 0.075 | 53 | INV. EX. |
| 27 | J | 5 | 50 | 22 | 12 | 95 | 11 | 33 | 1218 | 15.5 | 0.070 | 26 | COMP. EX. |
| 28 | J | 1 | 76 | 3 | 13 | 99 | 7 | 13 | 1281 | 13.6 | 0.066 | 55 | COMP. EX. |
| 29 | K | 8 | 62 | 4 | 8 | 92 | 18 | 16 | 1222 | 15.2 | 0.072 | 49 | INV. EX. |
| 30 | K | 7 | 55 | 8 | 10 | 93 | 15 | 20 | 1210 | 16.2 | 0.073 | 42 | INV. EX. |
| 31 | K | 0 | 76 | 4 | 16 | 100 | 4 | 12 | 1302 | 13.1 | 0.063 | 62 | COMP. EX. |

| No. | Steel | Microstructure | | | | | | | Characteristics | | | | Remarks |
|---|---|---|---|---|---|---|---|---|---|---|---|---|---|
| | | Polygonal ferrite area fraction (%) | Tempered martensite area fraction (%) | Fresh martensite area fraction (%) | Lower bainite area fraction (%) | Remaining microstructure*10 area fraction (%) | Retained $\gamma$ volume fraction (%) | $S_{C\geq0.5}/S_{C\geq0.3}$ (%) | TS (MPa) | T-El (%) | n value (2%-5%) | $\lambda$ (%) | |
| 32 | K | 2 | 41 | 12 | 42 | 98 | <u>3</u> | 31 | 1232 | 13.8 | 0.071 | 41 | COMP. EX. |
| 33 | <u>L</u> | 2 | 63 | <u>23</u> | <u>2</u> | 98 | 10 | 28 | 1275 | 13.2 | 0.058 | 28 | COMP. EX. |
| 34 | <u>M</u> | 1 | 58 | <u>26</u> | <u>3</u> | 99 | 12 | 33 | 1284 | 13.1 | 0.055 | 24 | COMP. EX. |

*Underlines indicate being outside of the range of the present invention.
*10: Microstructure including one, or two or more of tempered martensite, fresh martensite, upper bainite, lower bainite, and retained austenite

The steel sheets of the present invention have superior ductility, excellent stretch flange formability, and high strain hardening exponent and can be suitably applied to press forming and be suitably used in the press forming process in the manufacturing of, for example, automobiles and home appliances.

The steel sheets of INVENTIVE EXAMPLES have high strength, high ductility, excellent stretch flange formability, and high strain hardening exponent. This has shown that members obtained by forming of the steel sheets of INVENTIVE EXAMPLES, members obtained by joining of the steel sheets of INVENTIVE EXAMPLES, and members obtained by forming and joining of the steel sheets of INVENTIVE EXAMPLES will have high strength, high ductility, excellent stretch flange formability, and high strain hardening exponent similar to the steel sheets of INVENTIVE EXAMPLES.

**Claims**

1. A steel sheet having a chemical composition comprising, in mass%:

   C: 0.06 to 0.25%,
   Si: 0.4 to 2.5%,
   Mn: 1.5 to 3.5%,
   P: 0.02% or less,
   S: 0.01% or less,
   sol. Al: less than 1.0%, and
   N: less than 0.015%,
   the balance being Fe and incidental impurities,
   the steel sheet being such that:

      the steel sheet comprises a steel microstructure including, in area fraction,
      polygonal ferrite: 10% or less (including 0%),
      tempered martensite: 30% or more,
      fresh martensite: 20% or less (including 0%),
      lower bainite: 5 to 50%, and, in volume fraction,
      retained austenite: 5 to 20%, and
      the steel sheet has a proportion $S_{C\geq0.5}/S_{C\geq0.3} \times 100$ of 15% or
      more wherein $S_{C\geq0.5}$ is the area of a region having a C concentration of 0.50% or more and $S_{C\geq0.3}$ is the
      area of a region having a C concentration of 0.30% or more.

2. The steel sheet according to claim 1, wherein the chemical composition further comprises, in mass%, one or two selected from:

   Ti: 0.1% or less, and
   B: 0.01% or less.

3. The steel sheet according to claim 1 or 2, wherein the chemical composition further comprises, in mass%, one, or two or more selected from:

   Cu: 1% or less,
   Ni: 1% or less,
   Cr: 1.0% or less,
   Mo: 0.5% or less,
   V: 0.5% or less,
   Nb: 0.1% or less,
   Zr: 0.2% or less, and
   W: 0.2% or less.

4. The steel sheet according to any of claims 1 to 3, wherein the chemical composition further comprises, in mass%, one, or two or more selected from:

   Ca: 0.0040% or less,
   Ce: 0.0040% or less,

La: 0.0040% or less,
Mg: 0.0030% or less,
Sb: 0.1% or less, and
Sn: 0.1% or less.

5. The steel sheet according to any of claims 1 to 4, which has a galvanized layer on a surface.

6. A member obtained using the steel sheet described in any of claims 1 to 5.

7. A method for manufacturing a steel sheet, comprising hot rolling and cold rolling a steel slab having the chemical composition described in any of claims 1 to 4, and annealing the cold rolled steel sheet,
the annealing comprising:

a step of holding the steel sheet at an annealing temperature of 810 to 900°C;
a step of cooling the steel sheet in a range of temperatures from 810°C to a martensite start temperature Ms (°C) at an average cooling rate CR1 of 5 to 100°C/s;
a step of causing the steel sheet to reside in a range of temperatures from the martensite start temperature Ms (°C) to a residence finish temperature T1 of Ms - 100 (°C) to Ms - 10 (°C) for a residence time t of 5 seconds or more and 60 seconds or less while cooling the steel sheet at an average cooling rate CR2 of 10°C/s or less;
a step of cooling the steel sheet in a range of temperatures from the residence finish temperature T1 to a finish cooling temperature T2 of 180°C or above and below 290°C at an average cooling rate CR3 of 3 to 100°C/s;
a step of heating the steel sheet in a range of temperatures from the finish cooling temperature T2 to 380°C at an average heating rate of 2°C/s or more;
a step of causing the steel sheet to reside in a range of temperatures of 340°C or above and 590°C or below for 20 seconds or more and 3000 seconds or less while cooling the steel sheet at an average cooling rate CR4 of 0.01 to 5°C/s; and
a step of cooling the steel sheet to a temperature of 50°C or below at an average cooling rate CR5 of 0.1°C/s or more.

8. The method for manufacturing a steel sheet according to claim 7, wherein the step of causing the steel sheet to reside at an average cooling rate CR4 of 0.01 to 5°C/s includes performing a hot-dip galvanizing treatment or a hot-dip galvannealing treatment on the steel sheet.

9. The method for manufacturing a steel sheet according to claim 7, further comprising a step of performing an electrogalvanizing treatment on the steel sheet after the step of cooling the steel sheet at an average cooling rate CR5 of 0.1°C/s or more.

10. A method for manufacturing a member, comprising a step of subjecting the steel sheet described in any of claims 1 to 5 to at least one working of forming and joining to produce a member.

# FIG. 1

# FIG. 2

$$S_{LB} = S_{TM+LB} \times D_{LB}/D_{TM+LB}$$
$$S_{TM} = S_{TM+LB} - S_{LB}$$

# FIG. 3

## INTERNATIONAL SEARCH REPORT

| International application No. |
|---|
| **PCT/JP2022/030899** |

| | |
|---|---|
| **A.** | **CLASSIFICATION OF SUBJECT MATTER** |

*C22C 38/00*(2006.01)i; *C21D 9/46*(2006.01)i; *C22C 38/06*(2006.01)i; *C22C 38/60*(2006.01)i
FI:  C22C38/00 301S; C21D9/46 G; C21D9/46 J; C22C38/00 301T; C22C38/06; C22C38/60

According to International Patent Classification (IPC) or to both national classification and IPC

| | |
|---|---|
| **B.** | **FIELDS SEARCHED** |

Minimum documentation searched (classification system followed by classification symbols)

C22C38/00-38/60; C21D9/46-9/48; C21D8/00-8/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2017/138504 A1 (JFE STEEL CORPORATION) 17 August 2017 (2017-08-17) claims | 1-10 |
| A | JP 2020-164990 A (JFE STEEL CORPORATION) 08 October 2020 (2020-10-08) claims | 1-10 |
| A | JP 2016-180139 A (KOBE STEEL LTD) 13 October 2016 (2016-10-13) claims, paragraphs [0023]-[0029], [0047]-[0048] | 1-10 |
| A | WO 2017/208759 A1 (KOBE STEEL LTD) 07 December 2017 (2017-12-07) claims | 1-10 |
| A | WO 2020/136988 A1 (JFE STEEL CORPORATION) 02 July 2020 (2020-07-02) claims | 1-10 |
| A | JP 2020-509162 A (TOYOTA MOTOR CO LTD) 26 March 2020 (2020-03-26) claims, paragraph [0045] | 1-10 |
| A | JP 2020-100894 A (JFE STEEL CORPORATION) 02 July 2020 (2020-07-02) claims | 1-10 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

Information on patent family members

International application No.

**PCT/JP2022/030899**

| Patent document cited in search report | | | Publication date (day/month/year) | Patent family member(s) | | | Publication date (day/month/year) |
|---|---|---|---|---|---|---|---|
| WO | 2017/138504 | A1 | 17 August 2017 | EP claims | 3415656 | A1 | |
| | | | | US | 2019/0040483 | A1 | |
| | | | | CN | 108603271 | A | |
| JP | 2020-164990 | A | 08 October 2020 | (Family: none) | | | |
| JP | 2016-180139 | A | 13 October 2016 | (Family: none) | | | |
| WO | 2017/208759 | A1 | 07 December 2017 | (Family: none) | | | |
| WO | 2020/136988 | A1 | 02 July 2020 | EP claims | 3904552 | A1 | |
| | | | | US | 2022/0074013 | A1 | |
| | | | | CN | 113227428 | A | |
| JP | 2020-509162 | A | 26 March 2020 | US claims, paragraph [0089] | 2019/0352750 | A1 | |
| | | | | WO | 2018/096090 | A1 | |
| | | | | CN | 110268085 | A | |
| JP | 2020-100894 | A | 02 July 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6035619 B
- JP 4411221 B
- JP 5463685 B
- JP 5780086 B
- JP 5728115 B